# EUROPEAN PATENT SPECIFICATION

(11) **EP 3 064 747 B1**
(45) Date of publication and mention of the grant of the patent: **01.01.2020**
(21) Application number: 14858310.7
(22) Date of filing: 27.10.2014
(51) Int. Cl.: F02D 19/02, F02D 41/02, F02D 41/04, F02M 21/02

(54) **AUXILIARY-CHAMBER-TYPE GAS ENGINE**
GASMOTOR MIT EINER HILFSKAMMER
MOTEUR À GAZ DE TYPE À CHAMBRE AUXILIAIRE

(30) Priority: 28.10.2013 JP 2013223754; 28.10.2013 JP 2013223755; 28.10.2013 JP 2013223756
(43) Date of publication of application: 07.09.2016
(73) Proprietor: Yanmar Co., Ltd., Osaka-shi, Osaka 530-8311 (JP); Japan Ship Machinery & Equipment Association, Minato-ku, Tokyo 105-0001 (JP)
(72) Inventor: HAGIWARA, Ryoichi, Osaka-shi Osaka 530-8311 (JP); YAMAGISHI, Osamu, Osaka-shi Osaka 530-8311 (JP)
(74) Representative: Jostarndt Patentanwalts-AG
(86) International application number: PCT/JP2014/078470
(87) International publication number: WO 2015/064527

(56) References cited:
- JP-A- 2003 161 176
- JP-A- 2008 215 130
- JP-A- 2009 057 870
- JP-A- 2009 057 872
- JP-A- 2009 057 873
- JP-A- 2013 185 515
- US-A1- 2005 022 782
- US-A1- 2009 071 439
- US-A1- 2011 195 817
- US-A1- 2012 109 499
- US-B2- 7 188 606

## Description

### TECHNICAL FIELD

The present invention relates to a technology of an auxiliary chamber type gas engine.

### BACKGROUND ART

A gas engine has been publicly known as an engine to be driven with a mixture of the air and a fuel gas as fuel. As one type of the gas engine, an auxiliary chamber type gas engine has been also publicly known. The auxiliary chamber type gas engine is a gas engine of a type in which fuel is injected into auxiliary chambers provided in cylinder heads (for example, Patent Document 1).

In the auxiliary chamber type gas engine, a town gas (such as 13A) is mainly used as a fuel gas. However, in an auxiliary chamber type gas engine used overseas, there is sometimes a case where a fuel gas of a different composition is supplied. The fuel gas of the different composition has a lower heating value than that of the town gas (such as 13A). Therefore, in the auxiliary chamber type gas engine, when the fuel gas of the different composition is supplied, fuel consumption is deteriorated. Another example of an auxiliary chamber type gas engine is shown in US 2009/0071439.

### PRIOR ART DOCUMENT

### PATENT DOCUMENT

PTL1: JP 2013-185515 A

### SUMMARY OF THE INVENTION

### PROBLEMS TO BE SOLVED BY THE INVENTION

An object of the present invention is to provide an auxiliary chamber type gas engine capable of preventing deterioration of fuel consumption even in a case where a fuel gas of a different composition is supplied.

### SOLUTIONS TO THE PROBLEMS

The object of the present invention is described above, and next, means for achieving the object will be described.

The auxiliary chamber type gas engine of the present invention is an auxiliary chamber type gas engine including a control device configured to determine a fuel flow rate and an air flow rate from the engine rotation speed and an engine load, wherein the control device makes a correction to decrease the air flow rate which is determined in a case where the fuel flow rate is required more than fuel flow rate which is determined.

In the auxiliary chamber type gas engine of the present invention, the control device determines an auxiliary chamber fuel flow rate from the engine rotation speed and the engine load, and makes a correction to increase the chamber fuel flow rate which is determined in a case where the fuel flow rate is required more than the fuel flow rate which is determined.

In the auxiliary chamber type gas engine of the present invention, in the control device, a fuel injection amount map for determining a command fuel injection amount from the engine rotation speed and the engine load, and a target air supply manifold pressure map for determining target air supply manifold pressure from the engine rotation speed and the engine load are set, and the control device makes a correction to decrease the target air supply manifold pressure of the target air supply manifold pressure map in a case where a fuel injection amount is required more than the command fuel injection amount determined with respect to the engine rotation speed and the engine load.

In the auxiliary chamber type gas engine of the present invention, in the control device, a target auxiliary chamber fuel gas pressure for determining target auxiliary chamber fuel gas pressure from the engine rotation speed and the engine load is set, and the control device makes a correction to increase the target auxiliary chamber fuel gas pressure of the target auxiliary chamber fuel gas pressure map in a case where the fuel injection amount is required more than the command fuel injection amount determined with respect to the engine rotation speed and the engine load.

In the auxiliary chamber type gas engine of the present invention, in the fuel injection amount map, a correction to the command fuel injection amount is made based on at least fuel pressure, a fuel temperature, or a lubricating oil temperature.

### EFFECTS OF THE INVENTION

According to the auxiliary chamber type gas engine of the present invention, even in a case where a fuel gas of a different composition is supplied, deterioration of fuel consumption can be prevented.

### BRIEF DESCRIPTION OF THE DRAWINGS

Fig. 1 is a schematic view showing a configuration of an electric propulsion ship.
Fig. 2 is a schematic view showing a configuration of an auxiliary chamber type gas engine.
Fig. 3 is a schematic view similarly showing a cylinder head.
Fig. 4 is a schematic view showing an image of fuel injection amount map correction control.
Fig. 5 is a flowchart showing a flow of target air supply manifold pressure map correction control.
Fig. 6 is a schematic view showing a flow of another target air supply manifold pressure map correction control.
Fig. 7 is a flowchart showing a flow of target auxiliary chamber fuel gas pressure map correction control.
Fig. 8 is a flowchart showing a flow of first throttle opening degree control.
Fig. 9 is a time chart of the same control.
Fig. 10 is a flowchart showing a flow of second throttle opening degree control.
Fig. 11 is a time chart of the same control.
Fig. 12 is a compressor performance diagram of the same control.

### EMBODIMENTS OF THE INVENTION

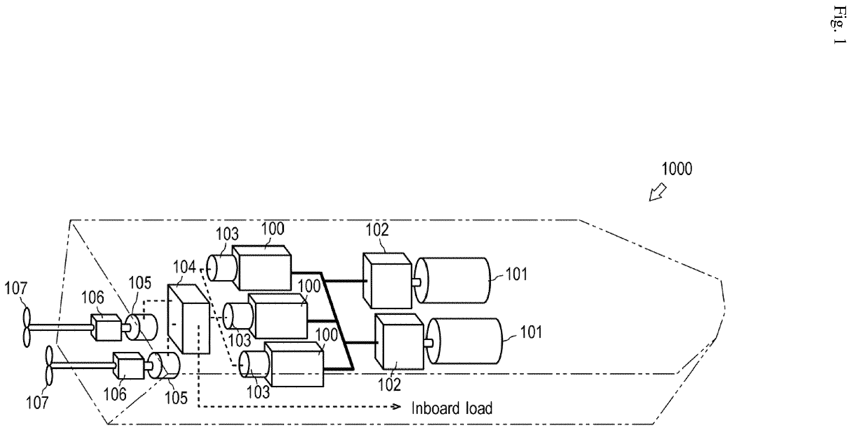

A configuration of an electric propulsion ship 1000 will be described with reference to Fig. 1.

Fig. 1 schematically represents the configuration of the electric propulsion ship 1000.

In the electric propulsion ship 1000, auxiliary chamber type gas engines 100 of the present embodiment are mounted. The electric propulsion ship 1000 includes LNG tanks 101, carburetors 102, the auxiliary chamber type gas engines 100, generators 103, an electric power control board 104, propulsion motors 105, reducers 106, and variable pitch propellers 107.

In the electric propulsion ship 1000, a fuel gas stored in the LNG tanks 101, 101 is mixed with the air by the carburetors 102, 102, and supplied to the auxiliary chamber type gas engines 100, 100, 100. The generators 103, 103, 103 are driven by the auxiliary chamber type gas engines 100, 100, 100, and electric power is supplied to the propulsion motors 105, 105 and an inboard load by the electric power control board 104. Drive of the propulsion motors 105, 105 is transmitted to the variable pitch propellers 107, 107 via the reducers 106, 106.

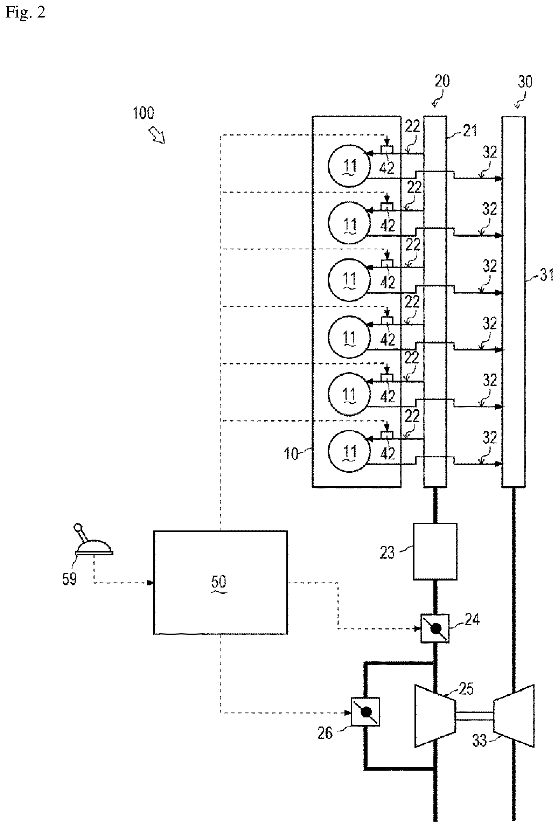

A configuration of each of the auxiliary chamber type gas engines 100 will be described with reference to Fig. 2.

Fig. 2 schematically represents the configuration of the auxiliary chamber type gas engine 100.

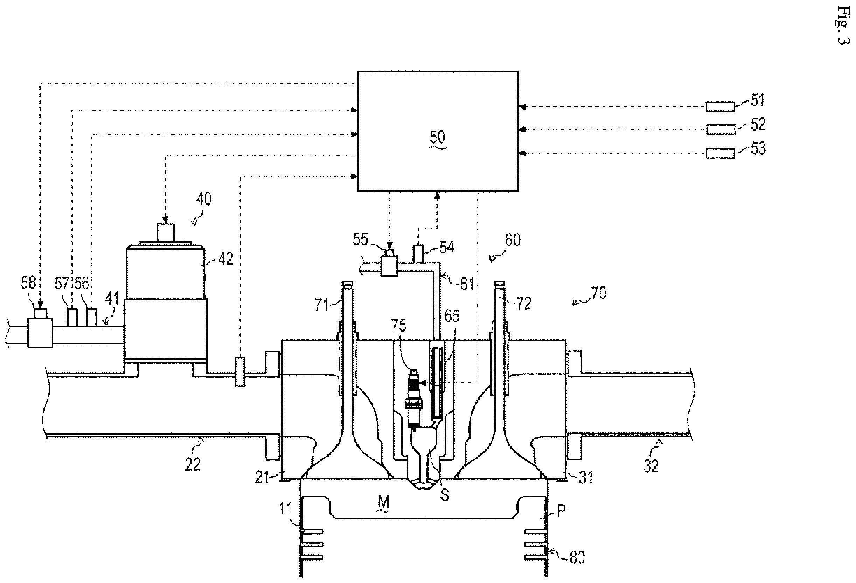

The auxiliary chamber type gas engine 100 is an embodiment relating to an auxiliary chamber type gas engine of the present invention. The auxiliary chamber type gas engine 100 is an engine to be driven with a gas as fuel, and a gas engine of a type in which fuel is injected into auxiliary chambers S provided in cylinder heads 70 (refer to Fig. 3).

The auxiliary chamber type gas engine 100 includes an engine main body 10, an air supply system 20, an exhaust system 30, and an ECU (Engine Control Unit) 50 serving as a control means.

The engine main body 10 includes six cylinders 11....11. The cylinders 11....11 communicate with an air supply manifold 21 by air supply ports 22....22, and communicate with an exhaust manifold 31 by exhaust ports 32....32. Gas injectors 42....42 are respectively provided in the air supply ports 22....22.

The air supply system 20 includes the air supply manifold 21, an intercooler 23, a throttle valve 24, a compressor 25, and a bypass throttle 26. In the air supply system 20, the intercooler 23, the throttle valve 24, and the compressor 25 are disposed in order from the air supply manifold 21 toward the upstream side of a flow of the air. The bypass throttle 26 is provided on a bypass route bypassing the compressor 25.

The exhaust system 30 includes the exhaust manifold 31 and a turbine 33. In the exhaust system 30, the turbine 33 is disposed from the exhaust manifold 31 toward the downstream side of the flow of the air.

The ECU 50 is connected to the throttle valve 24, the bypass throttle 26, and the gas injectors 42....42. The ECU 50 has a function of controlling the throttle valve 24 or the bypass throttle 26 in such a manner that air supply manifold pressure Pi serving as an air flow rate becomes target air supply manifold pressure Pim. The ECU 50 is also connected to an acceleration lever 59 that commands application of a load.

The air flow rate is the air supply manifold pressure Pi in the present embodiment, however, the present invention is not limited to this. For example, an air flow rate supplied to the air supply manifold 21 may be detected by a mass flowmeter or an orifice flow rate meter, and the detected air flow rate may serve as the air amount of the present invention.

A configuration of each of the cylinder heads 70 will be described with reference to Fig. 3.

Fig. 3 schematically represents the configuration of the cylinder head 70.

The cylinder head 70 is disposed in an upper part of a cylinder block 80, and includes a main chamber system 40 and an auxiliary chamber system 60.

In the cylinder head 70, the auxiliary chamber S is formed, and an air supply valve 71 and an exhaust valve 72 are provided. On the upper side of the auxiliary chamber S, a spark plug 75 and the auxiliary chamber system 60 are provided.

In the cylinder block 80, the cylinder 11 is formed and a piston P is slidably housed. A main chamber M is formed in the cylinder 11 by a top part of the piston P.

The main chamber system 40 includes a fuel supply pipe 41, the gas injector 42, a main chamber fuel gas temperature sensor 56 that detects a main chamber fuel gas temperature Tm, a main chamber fuel gas pressure sensor 57 that detects main chamber fuel gas pressure Pm, and a main chamber fuel gas pressure adjuster 58.

The auxiliary chamber system 60 includes a fuel supply pipe 61, a check valve 65, an auxiliary chamber fuel gas pressure sensor 54 that detects auxiliary chamber fuel gas pressure Ps serving as an auxiliary chamber fuel flow rate, and an auxiliary chamber fuel gas pressure adjuster 55.

The auxiliary chamber fuel flow rate is the auxiliary chamber fuel gas pressure Ps in the present embodiment, however, the present invention is not limited to this. For example, an auxiliary chamber fuel flow rate supplied by the auxiliary chamber fuel gas pressure adjuster 55 may be detected by a mass flowmeter or an orifice flow rate meter, and the detected auxiliary chamber fuel flow rate may serve as the auxiliary chamber fuel flow rate of the present invention.

The ECU 50 is connected to an engine rotation speed sensor 51 that detects the engine rotation speed Ne, an engine load sensor 52 that detects an engine load Ac, a lubricating oil temperature sensor 53 that detects a lubricating oil temperature Tj, the gas injector 42, the main chamber fuel gas temperature sensor 56, the main chamber fuel gas pressure sensor 57, the main chamber fuel gas pressure adjuster 58, the auxiliary chamber fuel gas pressure sensor 54, the auxiliary chamber fuel gas pressure adjuster 55, and the spark plug 75.

The ECU 50 has a function of controlling the auxiliary chamber fuel gas pressure adjuster 55 in such a manner that the auxiliary chamber fuel gas pressure Ps becomes target auxiliary chamber fuel gas pressure Pms.

In the ECU 50, a fuel injection amount map is set. The fuel injection amount map represents a correlation between the engine rotation speed Ne, the engine load Ac, and a command fuel injection amount Q serving as a fuel flow rate, and determines the command fuel injection amount Q with respect to the engine rotation speed Ne and the engine load Ac.

The fuel flow rate is the command fuel injection amount Q in the present embodiment, however, the present invention is not limited to this. For example, a fuel flow rate supplied by the gas injector 42 may be detected by a mass flowmeter or an orifice flow rate meter, and the detected fuel flow rate may serve as the fuel flow rate of the present invention.

In the ECU 50, a target air supply manifold pressure map is set. The target air supply manifold pressure map represents a correlation between the engine rotation speed Ne, the engine load Ac, and the target air supply manifold pressure Pim, and determines the target air supply manifold pressure Pim with respect to the engine rotation speed Ne and the engine load Ac.

In the ECU 50, a target auxiliary chamber fuel gas pressure map is set. The target auxiliary chamber fuel gas pressure map represents a correlation between the engine rotation speed Ne, the engine load Ac, and the target auxiliary chamber fuel gas pressure Psm, and determines the target auxiliary chamber fuel gas pressure Psm with respect to the engine rotation speed Ne and the engine load Ac.

With such a configuration, the ECU 50 controls the auxiliary chamber fuel gas pressure adjuster 55 to supply the fuel gas to the auxiliary chamber S and ignite the fuel gas in the auxiliary chamber S. Meanwhile, the ECU 50 controls the throttle valve 24 or the bypass throttle 26 to supply the air to the main chamber M, and controls the main chamber fuel gas pressure adjuster 58 and the gas injector 42 to supply the fuel gas to the main chamber M. In the main chamber M, the fuel gas ignited in the auxiliary chamber S becomes flame with high flow speed and is emitted, and a mixed gas is ignited and exploded.

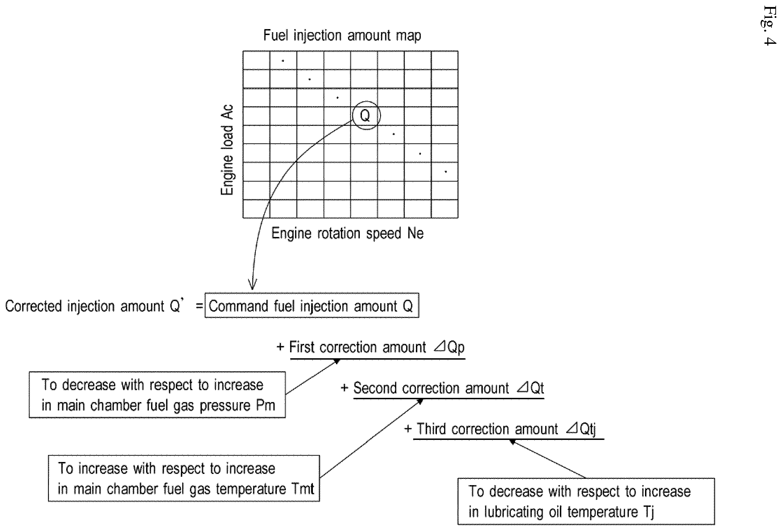

Fuel injection amount map correction control will be described with reference to Fig. 4.

Fig. 4 schematically represents an image of the fuel injection amount map correction control.

The fuel injection amount map correction control is control in which the command fuel injection amount Q calculated from the engine rotation speed Ne and the engine load Ac by the fuel injection amount map is corrected by at least a first correction amount ΔQp, a second correction amount ΔQt, or a third correction amount ΔQtj and made a corrected injection amount Q'.

In the auxiliary chamber type gas engine 100, when the main chamber fuel gas pressure Pm is increased, density of the fuel gas is increased, and the fuel injection amount required for corresponding to the same engine load Ac by the predetermined engine rotation speed Ne is decreased. Therefore, the command fuel injection amount Q is corrected so as to be decreased by the first correction amount ΔQp in proportion to the increase in the main chamber fuel gas pressure Pm. That is, the first correction amount ΔQp is to decrease in proportion to the increase in the main chamber fuel gas pressure Pm.

In the auxiliary chamber type gas engine 100, when the main chamber fuel gas temperature Tm is increased, the density of the fuel gas is lowered, and the fuel injection amount required for corresponding to the same engine load Ac by the predetermined engine rotation speed Ne is increased. Therefore, the command fuel injection amount Q is corrected so as to be increased by the second correction amount ΔQt in proportion to the increase in the main chamber fuel gas temperature Pt. That is, the second correction amount ΔQt is to increase in proportion to the increase in the main chamber fuel gas temperature Pt.

In the auxiliary chamber type gas engine 100, when the lubricating oil temperature Tj is increased, viscosity of lubricating oil is lowered, and the fuel injection amount required for corresponding to the same engine load Ac by the predetermined engine rotation speed Ne is decreased. Therefore, the command fuel injection amount Q is corrected so as to be decreased by the third correction amount ΔQtj in proportion to the increase in the lubricating oil temperature Tj. That is, the third correction amount ΔQtj is to decrease in proportion to the increase in the lubricating oil temperature Tj.

An effect of the fuel injection amount map correction control will be described.

According to the fuel injection amount map correction control, a proper fuel gas can be injected in accordance with a state of the main chamber fuel gas or the lubricating oil.

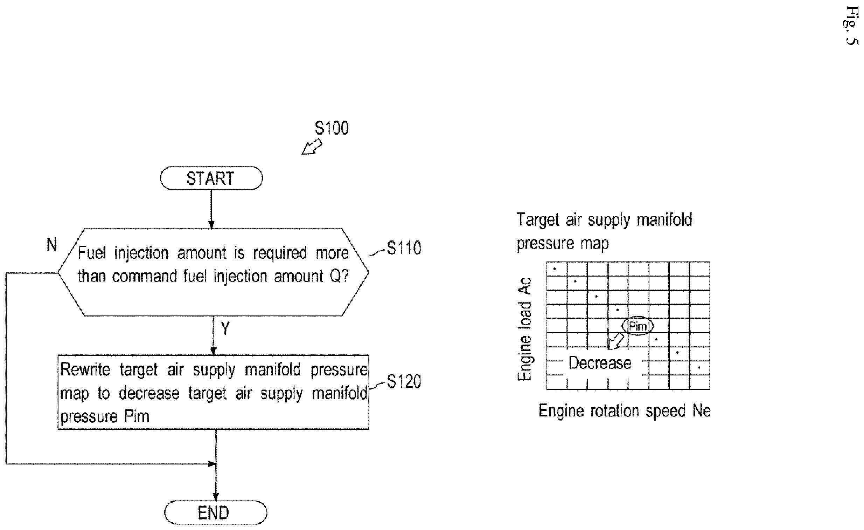

A flow of target air supply manifold pressure map correction control S100 will be described with reference to Fig. 5.

Fig. 5 represents the flow of the target air supply manifold pressure map correction control S100 in a flowchart.

The target air supply manifold pressure map correction control S100 is control in which the target air supply manifold pressure Pim calculated from the engine rotation speed Ne and the engine load Ac by the target air supply manifold pressure map is corrected.

In Step S110, the ECU 50 confirms whether or not the fuel injection amount is required more than the command fuel injection amount Q calculated from the engine rotation speed Ne and the engine load Ac by the fuel injection amount map. In a case where the fuel injection amount is required more, the flow is shifted to Step S120, and in other cases, the target air supply manifold pressure map correction control S100 is finished.

The case where the fuel injection amount is required more than the command fuel injection amount Q is for example considered to be a case where the target engine rotation speed Nem is not obtained with the engine load Ac by the command fuel injection amount Q, a case where with the predetermined engine rotation speed Ne and the predetermined engine load Ac, the fuel injection amount is required more than the command fuel injection amount Q calculated by the fuel injection amount map, or the like.

In Step S120, the ECU 50 makes a correction to (rewrites) the target air supply manifold pressure map to decrease the target air supply manifold pressure Pim.

An effect of the target air supply manifold pressure map correction control S100 will be described.

According to the target air supply manifold pressure map correction control S100, even in a case where a fuel gas of a different composition is supplied, deterioration of fuel consumption can be prevented.

That is, in the auxiliary chamber type gas engine 100, when the fuel gas of the different composition is supplied, due to a low heating value of the fuel gas of the different composition, the fuel injection amount is required more than usual. At this time, by making a correction to decrease the target air supply manifold pressure Pim, a proper air excess ratio is realized, so that the deterioration of the fuel consumption can be prevented.

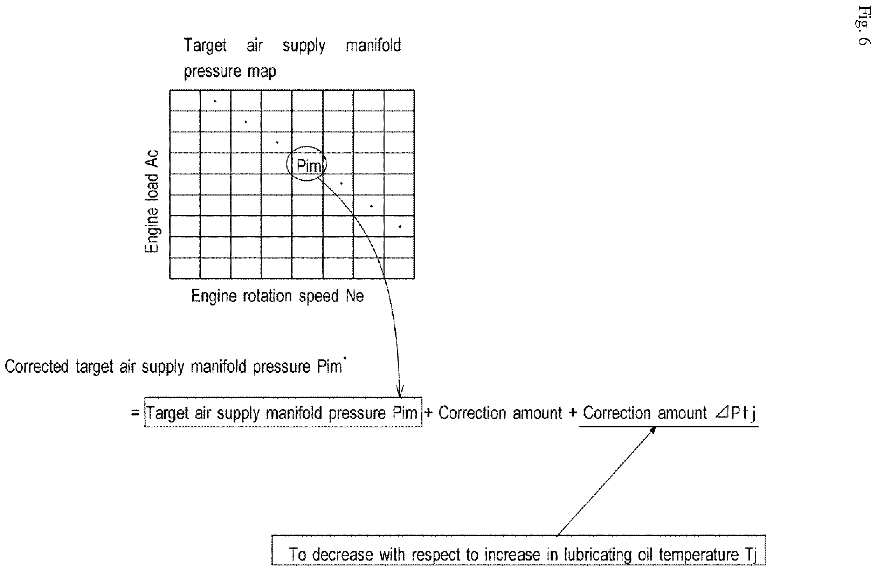

Another target air supply manifold map correction control will be described with reference to Fig. 6.

Fig. 6 schematically represents an image of another target air supply manifold map correction control.

The target air supply manifold map correction control is control in which the target air supply manifold pressure Pim calculated from the engine rotation speed Ne and the engine load Ac by the target air supply manifold pressure map is corrected by a correction amount ΔPtj.

In the auxiliary chamber type gas engine 100, in a cold mode (in a state where the lubricating oil temperature Tj is lowered), the air excess ratio is shifted to the rich side. Thus, combustion becomes unstabilized, speed regulating control cannot be performed, and hence there is a possibility that an engine stall is caused. Therefore, the target air supply manifold pressure Pim is corrected so as to be increased by the correction amount ΔPtj in proportion to the decrease in the lubricating oil temperature Tj.

An effect of the target air supply manifold map correction control will be described.

According to the target air supply manifold map correction control, even in the cold mode, a proper air excess ratio can be maintained.

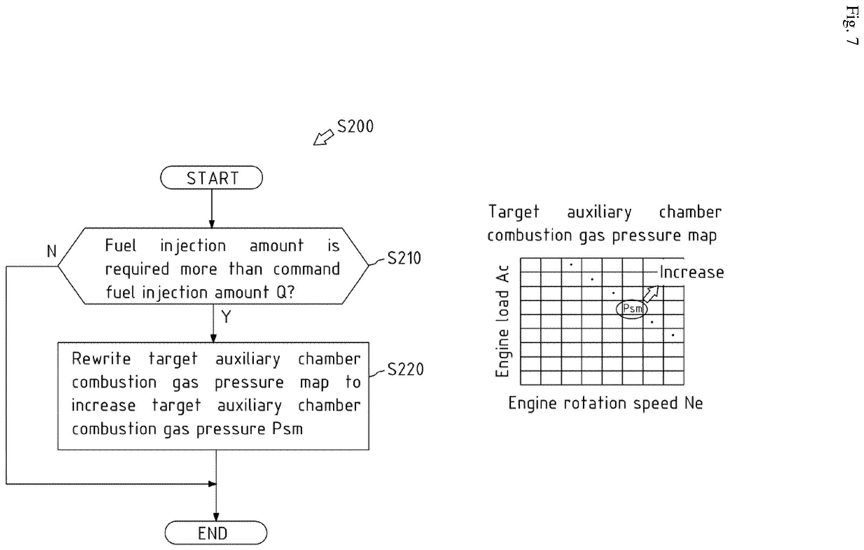

A flow of target auxiliary chamber fuel gas pressure map correction control S200 will be described with reference to Fig. 7.

Fig. 7 represents the flow of the target auxiliary chamber fuel gas pressure map correction control S200 in a flowchart.

The target auxiliary chamber fuel gas pressure map correction control S200 is control in which the target auxiliary chamber fuel gas pressure Psm calculated from the engine rotation speed Ne and the engine load Ac by the target auxiliary chamber fuel gas pressure map is corrected.

In Step S210, the ECU 50 confirms whether or not the fuel injection amount is required more than the command fuel injection amount Q calculated from the engine rotation speed Ne and the engine load Ac by the fuel injection amount map. In a case where the fuel injection amount is required more, the flow is shifted to Step S220, and in other cases, the target auxiliary chamber fuel gas pressure map correction control S200 is finished.

The case where the fuel injection amount is required more than the command fuel injection amount Q is for example considered to be a case where the target engine rotation speed Nem is not obtained with the engine load Ac by the command fuel injection amount Q, a case where with the predetermined engine rotation speed Ne and the predetermined engine load Ac, the fuel injection amount is required more than the command fuel injection amount Q calculated by the fuel injection amount map, or the like.

In Step S220, the ECU 50 makes a correction to (rewrites) the target auxiliary chamber fuel gas pressure map to increase the target auxiliary chamber fuel gas pressure Psm.

An effect of the target auxiliary chamber fuel gas pressure map correction control S200 will be described.

According to the target auxiliary chamber fuel gas pressure map correction control S200, even in a case where the fuel gas of the different composition is supplied, the deterioration of the fuel consumption can be prevented.

That is, in the auxiliary chamber type gas engine 100, when the fuel gas of the different composition is supplied, due to the low heating value of the fuel gas of the different composition, the fuel injection amount is required more than usual. At this time, by making a correction to increase the target auxiliary chamber fuel gas pressure Psm, a proper air excess ratio is realized, so that the deterioration of the fuel consumption can be prevented.

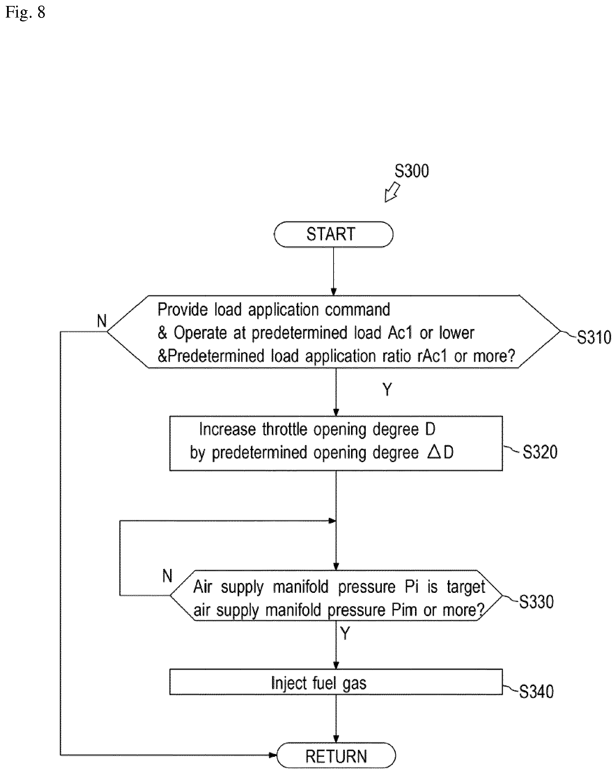

A flow of first throttle opening degree control S300 will be described with reference to Fig. 8.

Fig. 8 represents the flow of the first throttle opening degree control S300 in a flowchart.

The first throttle opening degree control S300 is control in which a throttle opening degree D of the throttle valve 24 is increased in a case where the auxiliary chamber type gas engine 100 is brought from a low-load operation state into a high-load operation state.

In Step S310, the ECU 50 confirms whether or not the auxiliary chamber type gas engine 100 is currently operated at a predetermined load Ac1 or lower, and whether or not a load application command is received from the acceleration lever 59, and whether or not the application of the load commanded by the acceleration lever 59 is a predetermined load application ratio rAcl or more. A load application ratio rAc is a ratio of the applied load with respect to an engine rated load. The predetermined load Ac1 and the predetermined load application ratio rAc1 are preliminarily stored in the ECU 50.

In Step S310, when the above conditions are met, the ECU 50 shifts the flow to Step S320. On the other hand, when the above conditions are not met, the first throttle opening degree control S300 is finished.

In Step S320, the ECU 50 increases the throttle opening degree D by a predetermined opening degree ΔD by the throttle valve 24. The predetermined opening degree ΔD is determined by the engine rotation speed Ne and the load application ratio rAc, and preliminarily stored in the ECU 50.

In Step S330, the ECU 50 judges whether or not the air supply manifold pressure Pi becomes the target air supply manifold pressure Pim or more. In a case where the air supply manifold pressure Pi becomes the target air supply manifold pressure Pim or more, the flow is shifted to Step S340.

The control of Step S330 may be replaced with control in which the throttle valve 24 is increased by the predetermined opening degree ΔD and stands by for a predetermined period of time until the flow is shifted to Step S340.

In Step S340, the ECU 50 increases a fuel gas injection amount to the cylinders 11....11 by the gas injectors 42....42. In reality, by applying the load and lowering the engine rotation speed Ne, the fuel gas injection amount is increased.

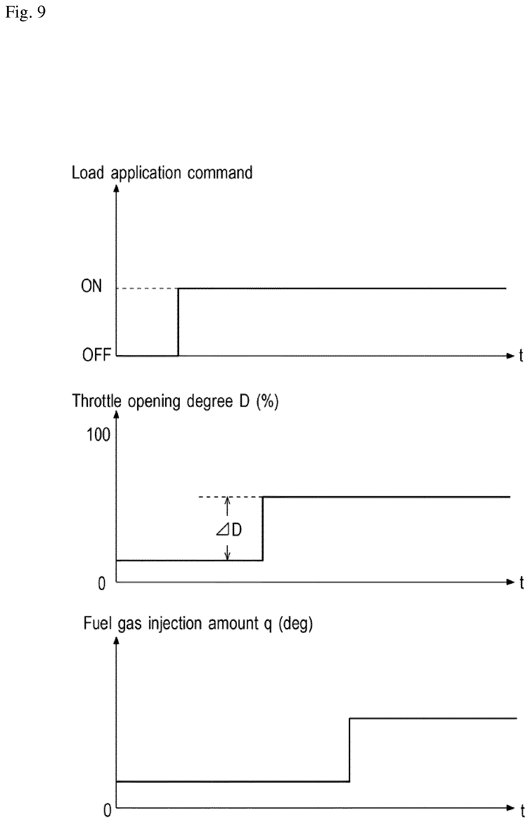

An operation of the first throttle opening degree control S300 will be described with reference to Fig. 9.

Fig. 9 represents the operation of the first throttle opening degree control S300 in a time chart. Fig. 9 represents the load application command by ON and OFF, represents the throttle opening degree D by a ratio (%) with respect to a full throttle state, and represents a fuel gas injection amount q by an injection time (deg).

The first throttle opening degree control S300 will be described in chronological order. At first, the acceleration lever 59 provides the load application command, then, the throttle opening degree D is increased by the predetermined opening degree ΔD by the throttle valve 24, then, the air supply manifold pressure Pi reaches the target air supply manifold pressure Pim, and then the fuel gas injection amount to the cylinders 11....11 is increased by the gas injectors 42....42.

An effect of the first throttle opening degree control S300 will be described.

According to the first throttle opening degree control S300, discharge of hydrocarbon at the time of a low load can be reduced, and a load application limit can be increased.

Conventionally, in a gas engine, in a case where a load is applied from a low load to a high load, an increase in an air supply inflow amount by a throttle valve cannot follow an increase in fuel gas by gas injectors. Thus, the gas engine is brought into a rich state and there is a possibility that an accidental fire is caused. Therefore, the load application limit (ratio of the load to be applied with respect to the engine rated load) is set low.

On the other hand, in a case where control is performed to increase the air supply inflow amount from the time of a low load in order to set the load application limit high, the gas engine is brought into a lean state and a discharge amount of hydrocarbon is increased.

In the first throttle opening degree control S300, in a case where the load is applied from a low load to a high load, before increasing the fuel gas by the gas injectors 42....42, the air supply inflow amount is increased by the throttle valve 24, so that the load application limit can be increased. In addition, there is no need for performing control to increase the air supply inflow amount from the time of a low load, so that the discharge of hydrocarbon at the time of a low load can be reduced.

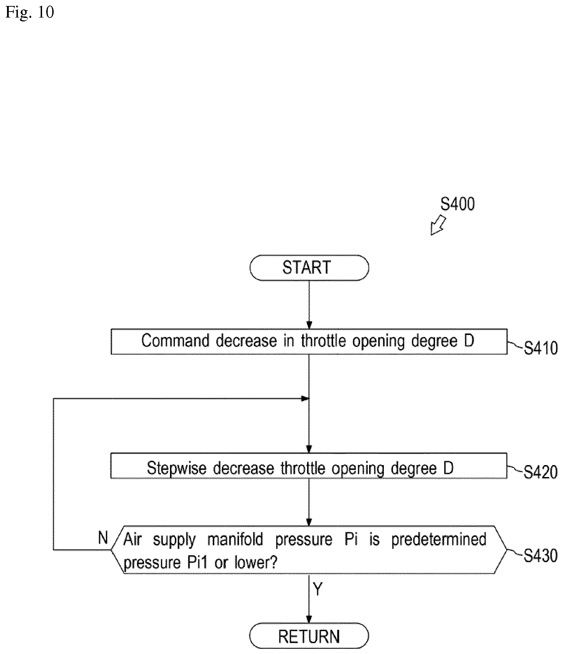

A flow of second throttle opening degree control S400 will be described with reference to Fig. 10.

Fig. 10 represents the flow of the second throttle opening degree control S400 in a flowchart.

The second throttle opening degree control S400 is control in which the throttle opening degree D of the throttle valve 24 is decreased in a case where the auxiliary chamber type gas engine 100 is brought from a high-load operation state into a low-load operation state.

In Step S410, the ECU 50 for example receives a command to reduce the load and decrease the throttle opening degree D of the throttle valve 24 by the acceleration lever 59.

In Step S420, the ECU 50 stepwise decreases the throttle opening degree D toward a target throttle opening degree Dm by the throttle valve 24. The stepwise decrease in the throttle opening degree D is to decrease the throttle opening degree D at speed of 10%/s. The speed of 10%/s is speed at which, when a full throttle state is 100%, the throttle opening degree D is decreased by an opening degree of 10% per second.

In Step S430, the ECU 50 confirms whether or not the air supply manifold pressure Pi is lowered to a predetermined pressure value Pi1. The predetermined pressure value Pi1 is preliminarily stored in the ECU 50. When the above condition is met, the ECU 50 finishes the second throttle opening degree control S400. On the other hand, when the above condition is not met, the flow is shifted to Step S420 again.

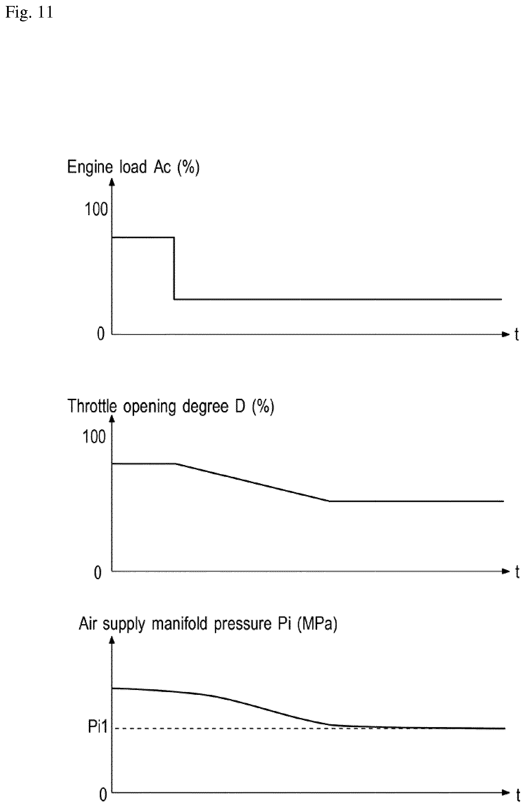

An operation of the second throttle opening degree control S400 will be described with reference to Fig. 11.

Fig. 11 represents the operation of the second throttle opening degree control S400 in a time chart. Fig. 11 represents the engine load Ac by a ratio (%) with respect to the engine rated load, represents the throttle opening degree D by a ratio (%) with respect to a full throttle state, and represents the air supply manifold pressure Pi by a pressure value (MPa).

The second throttle opening degree control S400 will be described in chronological order. At first, the command to decrease the throttle opening degree D of the throttle valve 24 is provided, and then the throttle opening degree D is stepwise decreased by the throttle valve 24 until the air supply manifold pressure Pi becomes the predetermined pressure value Pi1.

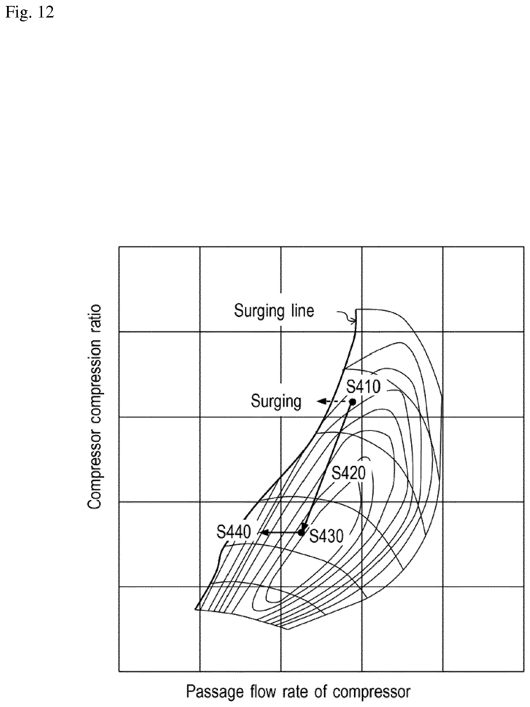

The operation of the second throttle opening degree control S400 will be described with reference to Fig. 12.

Fig. 12 represents the operation of the second throttle opening degree control S400 by compressor performance curves. In Fig. 12, the horizontal axis indicates a passage flow rate (m3/s) of the compressor 25, and the vertical axis indicates a compressor compression ratio (outlet pressure of the compressor 25 with respect to inlet pressure).

In Step S410, since the auxiliary chamber type gas engine 100 is operated at a high load, the passage flow rate of the compressor 25 and the compressor compression ratio are relatively high, placed at a position near a surging line (on the left end side in a graph region).

In Step S420, since the throttle opening degree D is stepwise decreased toward the target throttle opening degree Dm by the throttle valve 24, the passage flow rate of the compressor is stepwise decreased (solid arrow in Fig. 12). At this time, the passage flow rate of the compressor is not radically decreased to reach the surging line and generate surging (broken arrow in Fig. 12).

In Step S430 and Step S440, since the air supply manifold pressure Pi is lowered to the predetermined pressure value Pi1, and hence throttle opening degree D is immediately decreased to the target throttle opening degree Dm by the throttle valve 24, the passage flow rate of the compressor is radically decreased (solid arrow in Fig. 12). However, as being sufficiently separated from the surging line, the passage flow rate does not reach the surging line to generate the surging (solid arrow in Fig. 12).

An effect of the second throttle opening degree control S400 will be described.

According to the second throttle opening degree control S400, the surging of the compressor 25 can be prevented.

The surging is easily generated when the engine load is radically brought from a high load to a low load, the throttle opening degree D of the throttle valve 24 is radically decreased, and the passage flow rate of the compressor 25 is radically decreased. Therefore, in the second throttle opening degree control S400, by stepwise decreasing the throttle opening degree D toward the target throttle opening degree Dm by the throttle valve 24, the surging of the compressor 25 can be prevented.

### INDUSTRIAL APPLICABILITY

The present invention is applicable to an auxiliary chamber type gas engine.

### DESCRIPTION OF REFERENCE SIGNS

- 11:: Cylinder
- 21:: Air supply manifold
- 42:: Gas injector
- 50:: ECU
- 51:: Engine rotation speed sensor
- 52:: Engine load sensor
- 53:: Lubricating oil temperature sensor
- 54:: Auxiliary chamber fuel gas pressure sensor
- 55:: Auxiliary chamber fuel gas pressure adjuster
- 56:: Main chamber fuel gas temperature sensor
- 57:: Main chamber fuel gas pressure sensor
- 58:: Main chamber fuel gas pressure adjuster
- 100:: Auxiliary chamber type gas engine
- Ne:: Engine rotation speed
- Ac:: Engine load
- Tj:: Lubricating oil temperature
- Pi:: Air supply manifold pressure
- Pim:: Target air supply manifold pressure
- Ps:: Auxiliary chamber fuel gas pressure
- Psm:: Target auxiliary chamber fuel gas pressure

## Claims

1. An auxiliary chamber type gas engine (100) comprising:
a control device configured to determine a fuel flow rate and an air flow rate from the engine rotation speed (Ne) and an engine load (Ac),
wherein
the control device makes a correction to decrease the airflow rate which is determined in a case where the fuel flow rate is required more than the fuel flow rate which is determined,
**characterized in that**
in the control device, a fuel injection amount map for determining a command fuel injection amount (Q) from the engine rotation speed (Ne) and the engine load (Ac), and a target air supply manifold pressure map for determining target air supply manifold pressure from the engine rotation speed (Ne) and the engine load (Ac) are set, the control device controls an air supply manifold pressure (Pi) as an air amount to reach the target air supply manifold pressure (Pim) determined by a target air supply manifold pressure map, and
the control device makes a correction to decrease the target air supply manifold pressure (Pim) of the target air supply manifold pressure map in a case where a fuel injection amount is required more than the command fuel injection amount (Q) which is determined from the engine rotation speed (Ne) and the engine load (Ac).

2. The auxiliary chamber type gas engine (100) according to claim 1, wherein the control device:
determines an auxiliary chamber fuel flow rate from the engine rotation speed (Ne) and the engine load (Ac); and
makes a correction to increase the auxiliary chamber fuel flow rate which is determined in a case where the fuel flow rate is required more than the fuel flow rate which is determined.

3. The auxiliary chamber type gas engine (100) according to claim 1, wherein
in the control device, a target auxiliary chamber fuel gas pressure (Psm) for determining target auxiliary chamber fuel gas pressure from the engine rotation speed (Ne) and the engine load (Ac) is set; and
the control device makes a correction to increase the target auxiliary chamber fuel gas pressure (Psm) of the target auxiliary chamber fuel gas pressure map in a case where the fuel injection amount is required more than the command fuel injection amount determined with respect to the engine rotation speed (Ne) and the engine load (Ac).

4. The auxiliary chamber type gas engine (100) according to claim 1 or 3, wherein
in the fuel injection amount map, a correction to the command fuel injection amount is made based on at least fuel pressure, a fuel temperature, or a lubricating oil temperature (Tj).

## Patentansprüche

1. Gasmotor vom Hilfskammertyp (100), aufweisend:
ein Steuergerät, das eingerichtet ist, um eine Kraftstoff-Durchflussrate und eine Luft-Durchflussrate aus der Motordrehzahl (Ne) und einer Motorlast (Ac) zu bestimmen,
wobei
das Steuergerät eine Korrektur vornimmt, um die Luft-Durchflussrate, die in einem Fall bestimmt wird, bei dem mehr Kraftstoff-Durchflussrate benötigt wird als die bestimmte Kraftstoff-Durchflussrate, zu verringern,
**dadurch gekennzeichnet, dass**
in dem Steuergerät ein Kraftstoffeinspritzmengen-Kennfeld zum Bestimmen einer Kraftstoffeinspritzbefehlsmenge (Q) aus der Motordrehzahl (Ne) und der Motorlast (Ac) und ein Soll-Luftzufuhrkrümmerdruck-Kennfeld zum Bestimmen eines Soll-Luftzufuhrkrümmerdrucks aus der Motordrehzahl (Ne) und der Motorlast (Ac) festgelegt werden, das Steuergerät einen Luftzufuhrkrümmerdruck (Pi) als eine Luftmenge dahingehend steuert, den Soll-Luftzufuhrkrümmerdruck (Pim) zu erreichen, der durch ein Soll-Luftzufuhrkrümmerdruck-Kennfeld bestimmt wurde, und
das Steuergerät eine Korrektur vornimmt, um den Soll-Luftzufuhrkrümmerdruck (Pim) des Soll-Luftzufuhrkrümmerdruck-Kennfelds zu erreichen, in einem Fall, bei dem eine höhere Kraftstoffeinspritzmenge benötigt wird als die Befehls-Kraftstoffeinspritzmenge, die aus der Motordrehzahl (Ne) und der Motorlast (Ac) bestimmt wurde.

2. Gasmotor vom Hilfskammertyp (100) nach Anspruch 1, wobei das Steuergerät:
aus der Motordrehzahl (Ne) und der Motorlast (Ac) eine Hilfskammer-Kraftstoffdurchflussrate bestimmt; und
eine Korrektur vornimmt, um die Hilfskammer-Kraftstoffdurchflussrate zu erhöhen, die in einem Fall bestimmt wird, bei dem die Kraftstoff-Durchflussrate mehr benötigt wird als die Kraftstoff-Durchflussrate, die bestimmt wird.

3. Gasmotor vom Hilfskammertyp (100) nach Anspruch 1, wobei
in dem Steuergerät ein Hilfskammer-Kraftstoffgas-Solldruck (Psm) zum Bestimmen eines Hilfskammer-Kraftstoffgas-Solldrucks aus der Motordrehzahl (Ne) und der Motorlast (Ac) festgelegt wird; und
das Steuergerät eine Korrektur vornimmt, um den Hilfskammer-Kraftstoffgas-Solldruck (Psm) des Soll-Luftzufuhrkrümmerhilfsdruck-Kennfelds zu erhöhen, in einem Fall, bei dem eine höhere Kraftstoffmenge benötigt wird als die Befehls-Kraftstoffeinspritzmenge, die in Bezug auf die Motordrehzahl (Ne) und die Motorlast (Ac) bestimmt wurde.

4. Gasmotor vom Hilfskammertyp (100) nach Anspruch 1 bis 3, wobei in dem Kraftstoffeinspritzmengen-Kennfeld auf Grundlage des Kraftstoffdrucks und/oder einer Kraftstofftemperatur und/oder einer Schmieröltemperatur eine Korrektur an der Befehls-Kraftstoffeinspritzmenge vorgenommen wird.

## Revendications

1. Moteur à gaz du type à chambre auxiliaire (100) comprenant :
un dispositif de commande configuré pour déterminer un débit de combustible et un débit d'air à partir de la vitesse de rotation de moteur (Ne) et d'une charge de moteur (Ac),
dans lequel
le dispositif de commande apporte une correction pour réduire le débit d'air qui est déterminé dans un cas où le débit de combustible requis est supérieur au débit de combustible qui est déterminé,
**caractérisé en ce que**
dans le dispositif de commande, une carte de quantité d'injection de combustible pour déterminer une quantité d'injection de combustible instruite (Q) à partir de la vitesse de rotation de moteur (Ne) et de la charge de moteur (Ac), et une carte de pression de collecteur d'alimentation en air cible pour déterminer une pression de collecteur d'alimentation en air cible à partir de la vitesse de rotation de moteur (Ne) et de la charge de moteur (Ac) sont définies, le dispositif de commande commande une pression de collecteur d'alimentation en air (Pi) en tant que quantité d'air pour atteindre la pression de collecteur d'alimentation en air cible (Pim) déterminée par une carte de pression de collecteur d'alimentation en air cible, et
le dispositif de commande apporte une correction pour réduire la pression de collecteur d'alimentation en air cible (Pim) de la carte de pression de collecteur d'alimentation en air cible dans un cas où une quantité d'injection de combustible requise est supérieure à la quantité d'injection de combustible instruite (Q) qui est déterminée à partir de la vitesse de rotation de moteur (Ne) et de la charge de moteur (Ac).

2. Moteur à gaz du type à chambre auxiliaire (100) selon la revendication 1, dans lequel le dispositif de commande :
détermine un débit de combustible de chambre auxiliaire à partir de la vitesse de rotation de moteur (Ne) et de la charge de moteur (Ac) ; et
apporte une correction pour augmenter le débit de combustible de chambre auxiliaire qui est déterminé dans un cas où le débit de combustible requis est supérieur au débit de combustible qui est déterminé.

3. Moteur à gaz du type à chambre auxiliaire (100) selon la revendication 1, dans lequel
dans le dispositif de commande, une pression de gaz combustible de chambre auxiliaire cible (Psm) pour déterminer une pression de gaz combustible de chambre auxiliaire cible à partir de la vitesse de rotation de moteur (Ne) et de la charge de moteur (Ac) est définie ; et
le dispositif de commande apporte une correction pour augmenter la pression de gaz combustible de chambre auxiliaire cible (Psm) de la carte de pression de gaz combustible de chambre auxiliaire cible dans un cas où la quantité d'injection de combustible requise est supérieure à la quantité d'injection de combustible instruite déterminée par rapport à la vitesse de rotation de moteur (Ne) et à la charge de moteur (Ac).

4. Moteur à gaz du type à chambre auxiliaire (100) selon la revendication 1 ou 3, dans lequel
dans la carte de quantité d'injection de combustible, une correction de la quantité d'injection de combustible instruite est apportée sur la base, au moins, d'une pression de combustible, d'une température de combustible, ou d'une température d'huile lubrifiante (T).
